# EUROPÄISCHE PATENTSCHRIFT

(11) **EP 1 883 999 B1**
(45) Veröffentlichungstag und Bekanntmachung des Hinweises auf die Patenterteilung: **20.10.2010**
(21) Anmeldenummer: 06753205.1
(22) Anmeldetag: 23.05.2006
(51) Int. Cl.: H01S 3/03, H01S 3/0971, H01S 3/0975, H01S 3/105, H01S 3/038

(54) **TRANSVERSAL ELEKTRISCH ANGEREGTER GASENTLADUNGSLASER ZUR ERZEUGUNG VON LICHTPULSEN MIT HOHER PULSFOLGEFREQUENZ UND VERFAHREN ZUR HERSTELLUNG**
ELECTRICALLY EXCITED GAS DISCHARGE LASER FOR GENERATING HIGH-REPETITION FREQUENCY LIGHT PULSES AND METHOD FOR THE PRODUCTION THEREOF
LASER A DECHARGE GAZEUSE TRANSVERSAL, EXCITE ELECTRIQUEMENT, POUR LA PRODUCTION D'IMPULSIONS LUMINEUSES A FREQUENCE DES TRAINS D'IMPULSIONS ELEVEE, ET SON PROCEDE DE FABRICATION

(30) Priorität: 23.05.2005 DE 102005024931
(43) Veröffentlichungstag der Anmeldung: 06.02.2008
(73) Patentinhaber: LTB-Lasertechnik Berlin GmbH, 12489 Berlin (DE)
(72) Erfinder: SCHOLZ, Matthias, 15838 Am Mellensee (DE); SCHURACK, Johannes, 12487 Berlin (DE); SPRANZ, Edgar, 89179 Beimerstetten (DE); SEGSA, Karl, Heinz, 12555 Berlin (DE); MÜLLER, Joachim, 16356 Ahrendsfelde (DE)
(74) Vertreter: Hoffmann, Heinz-Dietrich
(86) Internationale Anmeldenummer: PCT/DE2006/000919
(87) Internationale Veröffentlichungsnummer: WO 2006/125433

(56) Entgegenhaltungen:
- EP-A1- 0 585 482
- DD-A1- 261 466
- JP-A- 61 201 488
- US-A- 4 953 174
- IEHISA N ET AL: "SEALED-OFF CO2 LASER WITH IN-AU ALLOY SEALING" REVIEW OF SCIENTIFIC INSTRUMENTS, AIP, MELVILLE, NY, US, Bd. 57, Nr. 2, Februar 1986 (1986-02), Seiten 299-300, XP000712034 ISSN: 0034-6748

## Beschreibung

Die Erfindung bezieht sich auf einen transversal elektrisch angeregten Gasentladungslaser zur Erzeugung von Lichtpulsen mit hoher Pulsfolgefrequenz mit zumindest folgenden Komponenten:
- gasdichte Entladungsröhre aus einem keramischen Werkstoff mit einer abgeschlossenen Lasergasbefüllung,
- zwei sich axial erstreckende Hauptelektroden, die unter Bildung einer Gasentladungsstrecke in der Entladungsröhre angeordnet sind,
- eine stabförmige, sich parallel zu den Hauptelektroden erstreckende Hilfselektrode in der Entladungsröhre zur Steuerung der Startbedingungen der Gasentladung in der Entladungsröhre durch elektronische Vorionisierung,
- elektrischer Anregungskreis, der auf die Hauptelektroden und die Hilfselektroden einwirkt und einen Schalter umfasst,
- zwei optische Resonatorspiegel an den Stirnseiten der Entladungsröhre in axialer Ausrichtung zur Gasentladungsstrecke, wobei ein Resonatorspiegel zur Lichtauskopplung teildurchlässig ausgebildet ist, und auf ein Verfahren zur Herstellung eines solchen Gasentladungslasers.

Transversal angeregte Gasentladungslaser, insbesondere transversal elektrisch angeregte Laser - TEA-Laser -, sind seit Mitte der 70er Jahre bekannt. Diese Laser zeichnen sich durch eine Reihe von Eigenschaften aus, die für unterschiedliche Anwendungen besonders wichtig sind: sehr hohe Laser-Ausgangsleistung mit anpassbarer Höhe und Verlauf, hohe Strahlqualität, hohe Betriebssicherheit, gute Steuerbarkeit, kompakter Aufbau und hoher quantenoptischer Wirkungsgrad. Die Gasentladungslaser besitzen ein breites Anwendungsspektrum u.a. als Anregungslichtquelle in der laserinduzierten, zeitaufgelösten Spektroskopie, für intensitätsabhängige Absorptions- und Fluoreszenzuntersuchungen, als Testlichtquelle für elektronische Bauelemente und Baugruppen, als lonisationslichtquelle bei der Flugzeitspektroskopie, für die opto-akustische Oberflächendiagnostik extrem dünner Schichten, als Werkzeug in der Mikromaterialbearbeitung und für eine Vielzahl von Anwendungen unter dem UV-Mikroskop. Wichtig ist bei vielen Anwendungen insbesondere die erzeugbare hohe Pulsfolgefrequenz mit Lichtpulsen im Nano- und Sub-Nanosekundenbereich.

Das aktive Laservolumen eines Gasentladungslasers wird durch Höhe, Abstand und Länge der Hauptelektroden gebildet, dort läuft die stimulierte Lichtverstärkung ab. Das laseraktive Material wird von einem Gas oder Gasgemisch oder Dampf gebildet. Die.Gasentladung kann optisch oder elektrisch angeregt werden. Als wichtigste Gaslaser können genannt werden : CO₂-Laser mit einer Wellenlänge von 10,6 µm (fernes Infrarot), beispielsweise für die Materialbearbeitung, der HeNe-Laser mit einer Wellenlänge von 633 nm (rot), beispielsweise für die Messtechnik, der Excimer-Laser mit einer Wellenlänge von 157 nm bis 351 nm (ultraviolett, 157 nm F2, 351 nm XeF), beispielsweise für die Messtechnik und die Photochemie. Weiterhin ist der Stickstoff-Laser zu nennen, der alle Voraussetzungen besitzt, um zu einer wichtigen und preiswerten UV- Quelle bei 337,1 nm und einer Bandbreite von 100 pm zu werden. Die Wellenlänge 337,1 nm ist für viele Anwendungen ideal. Wichtige, weltweit eingeführte Verfahren stützen sich auf diese Wellenlänge. Das aktive Lasermedium Stickstoff bedarf keiner aufwändigen Aufbereitung für den Laserbetrieb. Es entstehen keine chemischen Verbindungen, die die Umwelt belasten. Die Physik des Lasers ermöglicht es ohne komplizierte Zusatzeinrichtungen, sehr kurze Lichtimpulse von einigen Nanosekunden bis zu 100 ps zu erzeugen. Ein Einsatz von Excimergasgemischen, auch unter Beteiligung von Halogengasen, ist ebenfalls möglich.

Die zur Lichtverstärkung benötigte Energiezuführung wird durch eine Hochstromentladung mit 1.000 - 3.000 A cm⁻² quer durch das aktive Laservolumen erreicht. Durch die Hochstromentladung wird die Mehrzahl der Gasmoleküle des Lasermediums in einen angeregten Zustand höherer Energie gebracht. Ein zufällig entstehendes Photon gleicher Richtung und Wellenlänge oder ein eingespeistes Oszillatorphoton starten den Verstärkungsprozess. Die Lichtwelle läuft zwischen den beiden Resonatorspiegeln, bis die Mehrzahl der Gasmoleküle den laseraktiven Anregungszustand verlassen hat. Ein Teil der Lichtenergie wird über den Auskoppelspiegel ausgekoppelt und steht als monochromatischer, gerichteter Lichtpuls zur Verfügung. Gespeist wird die Hochstromentladung aus niederinduktiven Kondensatoren, in denen in dem Zeitraum zwischen den Laserpulsen die erforderliche Elektroenergie zwischengespeichert wird. Über einen Hochleistungsschalter wird die zwischengespeicherte Energie mit einer Stromanstiegsgeschwindigkeit von 100 - 500 kAµs⁻¹ in das Laservolumen geleitet.

### Stand der Technik

Gasentladungslaser in unterschiedlichen Ausführungsformen bezüglich ihrer wesentlichen Komponenten Laserkanal und Anregungskreis sind aus einer Vielzahl von Druckschriften bekannt. Der Laserkanal ist in einem Entladungsgefäß, in dem die Gasentladungsstrecke liegt, angeordnet und besteht zumeist aus zwei sich gegenüberliegenden Hauptelektroden mit Baulängen von 10 mm bis 500 mm. Es gibt Gasentladungslaser mit einem externen Gasreservoir **(**DE 41 27 566 A1**),** und Gasentladungslaser mit einer abgeschlossenen Gasmenge im Entladungsgefäß, die durch passive oder aktive Umwälzung gekühlt wird. Zu diesen auch der beanspruchte Gasentladungslaser gehört.
Ein erstes Problem tritt bei den bekannten Gasentladungslasern bei der Gasdichtheit des Gasentladungsgefäßes auf. Aus der DE 295 20 820 U1 ist eine Laserröhre für halogenhaltige Gasentladungslaser bekannt, bei der alle Öffnungen unter Zwischenlage von Metalldichtungen abgeschlossen werden. Die DE 297 13 755 U1 offenbart einen Gasentladungslaser mit einer keramischen Gasentladungsröhre, bei der die Metalldichtungen einen elastischen Kern aufweisen. In der DE 40 10 149 A1 wird ein hochfrequenzangeregter Bandleiterlaser beschrieben, bei dem die Resonatorspiegel unmittelbar mit den Hauptelektroden galvanisch leitend verbunden sind. Aus der DE 101 47 655 A1 ist ein Gasentladungslaser bekannt, bei dem ein Isolator vorgesehen ist, der die Gasentladungskammer weitgehend umschließt und zur Einsparung von Dichtungen einstückig ausgebildet ist. In der DE 202 12 624 U1 wird ein kompakter Excimer-Laser zur Erzeugung hoher Pulsfrequenzen beschrieben, bei dem in einer keramischen Entladungsröhre eine Hauptelektrode angeordnet ist, die die Gasentladungsstrecke zu mehreren Wärmetauscherrohren bildet. Die Stirnseiten der Entladungsröhre sind unter Zwischenlage von Dichtungen durch zwei Flansche abgeschlossen. Neben einem Vorionisierer sind noch mehrere Stromformer und ein Ventilator in der Entladungsröhre angeordnet. Auf der Außenseite des Entladungsgefäßes sind mehrere größere lonisationskondensatoren als Teil der Entladungsschaltung vorgesehen. Aus der DE 36 19 354 A1 ist ein transversal angeregter Impulsgaslaser bekannt, der über radial verstellbare Hauptelektroden verfügt, was einen asymmetrischen Aufbau bedingt.

Neben dem Laserkanal mit dem Entladungsgefäß und den Hauptelektroden spielt der elektrische Anregungskreis zur Erzielung einer Hochstromentladung zwischen den Hauptelektroden beim Gasentladungslaser eine wichtige Rolle. Dieser besteht in der Regel aus zumindest zwei Kondensatoren, den Hauptelektroden, einem schnellen Schalter, beispielsweise Spark-gap oder Thyratron, und Bandleitungen zur schnellen und verlustarmen Energieübertragung. Aus der **G 80 25 354 U1** ist ein Hochenergielaser des TEA-Typs mit laserachsparallel angeordneten Vorionisierungsstäben bekannt, bei der der pulsformende elektrische Anregungskreis als Blümleinschaltung oder als Charge-Transferschaltung ausgebildet sein kann. Bei der Blümlein-Schaltung wird die Hochspannung über einen niederinduktiven Schalter an einen ersten Ladekondensator angelegt. Parallel zu diesem liegt die Reihenschaltung eines zweiten Ladekondensators und der Gasentladungsstrecke. Das Grundschaltbild der Blümleinschaltung ist beispielsweise aus der DE 44 08 041 A1 für einen Subnanosekundenstickstofflaser bekannt. Die Charge-Transfer-Schaltung unterscheidet sich von der Blümlein-Schaltung insbesondere dadurch, dass der zweite Ladekondensator parallel zur Gasentladungsstrecke liegt und dass der erste Ladekondensator in Reihe zum niederinduktiven Schalter und damit der Hochspannungsversorgung geschaltet ist. Mit der Charge-Transfer-Schaltung sind daher nur Schaltpulse bis ca. 1 ns mit einer Anstiegszeit des Schalters von ca. 40 ns möglich, wohingegen die Blümlein-Schaltung derzeit Pulse bis 50 ps bei einer Schalteranstiegszeit von unter 12 ns generieren kann. Aus dem **Produktblatt** "ALLTEC Power Switch" der Firma ALLTEC (abrufbar (Stand 18.05.2005) im Internet unter der Adresse http://www.atttec.org/deutsch/atttec_power/frame.htm) ist die Verwendung eines Halbleiterschalters zum Betrieb der Hochspannungsentladung von TEA CO₂ Lasern bekannt. Dieser hat eine Reihe von Vorteilen und kann die herkömmlichen Thyristoren ersetzen, zeigt aber immer noch ähnlich große Abmaße im Bereich von einigen 100 mm.

Um eine Laserentladung gleichförmigen Volumens unter Vermeidung einer elektrischen Lichtbogenbildung bei hohen Gasdrücken zu erzielen, ist es erforderlich, eine Anfangskonzentration von Ionen und Elektronen in der Gasentladungsstrecke vor dem Anlegen des elektrischen Hauptpulses zu erzielen. Diese Technik wird als Vorionisierung bezeichnet und ist beispielsweise aus der DE 28 11 198 A1 bekannt. Eine Möglichkeit der Erzielung einer Vorionisierung ist die Verwendung des charakteristischen Blümlein-Spannungs-Vorimpulses, der an den Hauptelektroden während des Ladezyklus der Blümlein-Übertragungsleitung ausgebildet wird. Dieser schnelle Impuls ist in der Amplitude groß genug, damit eine anfängliche Störung von Elektronen in der Nähe der Hauptelektroden erzielt wird. Er ist jedoch auch ausreichend kurz, damit ein vollständiges Durchschlagen des Lasergases verhindert wird. Die Größe und das Zeitverhalten des Vorimpulses werden durch die Impulsladegeschwindigkeit der Blümlein-Übertragungsleitung gesteuert und können über einen weiten Bereich von Werten verändert werden, damit eine optimale Vorionisierung erzielt wird. Die Hochstromentladung wird direkt auf die Hilfselektroden zur Erzielung einer Vorionisierung und über Kontaktelektroden auf der Außenseite des Entladungsgefäßes auf die Hauptelektroden gegeben. Aus der DE 37 34 690 A1 ist es weiterhin bekannt, eine Kontaktelektrode auf der Außenseite des Entladungsgefäßes als Kondensatorelektrode zu verwenden.

In der US 4.953.174 wird ein transversal elektrisch angeregter Gasentladungslaser zur Erzeugung von Laserpulsen offenbart, der ein quaderförmiges Gehäuse mit einem Deckel aufweist. An der Innenseite des Deckels sind eine längliche Hauptelektrode und zwei über ihre Kapazität auf die Hauptelektrode wirkende Hilfselektroden ganzflächig befestigt, auf dem Boden des Gehäuses befindet sich die zweite Hauptelektroden. Die Hilfselektroden kontaktieren die eine Hauptelektrode und bestehen jeweils aus einem Metallstab in einem Keramikrohr, das als Dielektrikum die wegen der rein kapazitiven Einwirkung der Hilfselektroden auf die Hauptelektrode sehr kritische Abstandshalterfunktion übernimmt. Alle Elektroden sind beispielsweise durch Kleben mit dem Gehäuse bzw. dem Deckel verbunden und unterliegen daher auch deren Längenänderungen. Wandungsdurchbrüche sind nicht vorgesehen. Im geschlossenen Zustand des Gehäuses kann keine Justage der Elektroden vorgenommen werden. An den Stirnseiten des Gehäuses sind Öffnungen mit je einem Reflektor vorgesehen. Mit den beiden Hauptelektroden ist eine Hochspannungspulsquelle verbunden. Eine direkte Verbindung mit den Hilfselektroden besteht nicht. Über das Material des Gehäuses und seinen Dichtungsgrad sowie über die Ausgestaltung des elektronischen Anregungskreises werden keine Angaben gemacht.

Die EP 0 585 482 A1 lehrt für einen Bandleiterlaser zur Erhöhung der Steifigkeit der Hauptelektroden eine Verbundelektrode einzusetzen, bei der Elektrodenteile auf Hohlprofil-Trägerteile durch Hartlöten oberhalb 700°C aufgelötet werden. Das Hohlprofil dient dabei gleichzeitig der Diffusionskühlung. Durch die Versteifung der Hauptelektroden entsteht ein mechanisch stabiler Verbund, bei dem eine Elektrodenjustage offenbar entfallen kann. Durch das Hartlöten kann das Lasersystem nach Fertigstellung auf Temperaturen oberhalb 400°C aufgeheizt werden, um Wasserrückstände vollständig entfernen zu können. Dabei soll es zu keiner Dejustage der versteiften Hauptelektroden, die zur Verbesserung der optischen Eigenschaften in der Laserkavität mit Gold beschichtet sein können, kommen, weshalb auch keine äußere Justagemöglichkeit vorgesehen ist.

Aus der DD 261 466 A1 ist es für einen TEA-Laser in der modifizierten Form eines koaxialen Kondensators mit einer die gesamte Laseranordnung umschließenden konzentrischen Außenelektrode und einer mehrteiligen Innenelektrode bekannt, dass die Außenelektrode und das Dielektrikum auf beiden Seiten des Laserkanals flexible Bereiche zur Verschiebung der Elektroden aufweisen können. Die Veränderung der Laserkanalgeometrie kann durch ein Druckelement, das seitlich auf den Laserkopf einwirkt, über diese flexiblen Bereiche, die als sickenförmige Vertiefungen ausgebildet sein können, erfolgen.

Der nächstliegende Stand der Technik, von dem die vorliegende Erfindung ausgeht, wird in der DE 33 13 811 A1 beschrieben. Der hieraus bekannte gattungsgemäße Gasentladungslaser mit den eingangs aufgezählten Komponenten zeigt eine zylindrisches, gasdichtes ("sealed-off") Entladungsgefäß, beispielsweise aus keramischem Aluminiumoxid Al₂O₃, das an beiden Stirnseiten durch Resonatorspiegel unter Zwischenlage von Dichtringen abgeschlossen ist. Zwischen je zwei Hilfselektroden wird die Vorionisierung außerhalb der Gasentladungsstrecke herbeigeführt. Die Hauptelektroden sind pilzförmig ausgeführt und an der Gefäßwandung gelagert und über Zuleitungen mit dem Anregungskreis verbunden. Der Anregungskreis enthält neben einem zur Gasentladungsstrecke parallel geschalteten Kondensator eine triggerbare Funkenstrecke und ist mit Haupt- und Hilfselektroden gleichermaßen verbunden. Über Lagerung und Justagemöglichkeiten der Hauptelektroden und Resonatorspiegel werden keine Aussagen getroffen. Ein derartiger Gasentladungslaser weist jedoch verschiedene Nachteile auf und ist dadurch schwer zu konditionieren. Dazu zählt, dass die statische und dynamische Gaslebensdauer durch auftretende Undichtigkeiten an den Fügestellen am Entladungsgefäß und durch relativ hohe Diffusionsraten der einzelnen Komponenten begrenzt ist. Da diese zudem in der Regel nicht auf Temperaturen weit oberhalb von 100°C erwärmbar sind, ist das Herstellen der erforderlichen Gashygiene im Entladungsgefäß, insbesondere hinsichtlich dipoliger Wasserrückstände, die zwangsläufig zu aggressiven Verbindungen mit Lasergaskomponenten und damit zur Betriebsunfähigkeit des Lasers führen, sehr zeitaufwändig (ca. 24 h) und erfordert ein mehrfaches Gasspülen. Der Schalter im Anregungskreis und der Entladungskanal stellen Verschleißbaugruppen dar. Es wird eine Stand-by-Leistung benötigt. Durch externe Bauelemente entstehen Verluste und Zusatzaufwand. Schließlich zeigt der Gasentladungslaser einen Zeitjitter, einen Temperaturgang und insbesondere ein Toleranzgebiet der optischen Schnittstelle aufgrund von Justageungenauigkeiten während der Laserherstellung und Fehlen von Nachjustiermöglichkeiten im Betrieb.

### Aufgabenstellung und Lösung

Die Aufgabe für die vorliegende Erfindung ist daher darin zu sehen, einen gattungsgemäßen Gasentladungslaser der eingangs beschriebenen Art anzugeben, der einfach und zuverlässig zu konditionieren ist. Er soll keine Undichtigkeiten und weiterhin geringste Diffusionsraten zeigen und damit eine hohe statische und dynamische Gaslebensdauer aufweisen. Insbesondere sollen keine Wasserrückstände im fertig gestellten Gaseritladungslaser mehr vorhanden sein. Diese sollen in einfacher Weise zuverlässig und schnell entfernt werden. Schließlich soll der erfindungsgemäße Gasentladungslaser kein Toleranzgebiet der optischen Schnittstelle aufweisen, da er sowohl direkt nach der Herstellung als auch im Betrieb hochgenau justierbar sein soll. Die erfindungsgemäße Lösung für den beschrieben Aufgabenkomplex für eine verbesserte Laserkonditionierung ist dem Erzeugnisanspruch und dem nebengeordneten Verfahrensanspruch zu entnehmen. Vorteilhafte Modifikationen des erfindungsgemäßen Gasentladungslasers sind den jeweils untergeordneten Unteransprüchen zu entnehmen und werden im Folgenden im Zusammenhang mit der Erfindung näher erläutert.

Der erfindungsgemäße Gasentladungslaser besteht aus einer gleichsam monolithischen Entladungsröhre mit einem abgeschlossenen Gasvorrat, deren Funktionskomponenten die mechanischen, gastechnischen, elektrischen und optischen Anforderungen an einen Laserkopf kombinatorisch erfüllen, verschleiß- und wartungsfrei sind und geringe Verluste bedingen. Dazu ist die Entladungsröhre ohne lösbare Verbindungen und Dichtungen an beiden Stirnseiten mit Trägerringen, in die die optischen Resonatorspiegel eingeschweißt sind, und an ihrem Umfang mit Trägerwannen für die Hauptelektroden durch geschmolzenes und mit entsprechend angeordneten partiellen Metallbelägen auf der keramischen Entladungsröhre verbundenes Hartlot stoffschlüssig verbunden. Die funktionswichtigen Komponenten des einstückigen Laserkopfs sind alle ultrahochvakuumtauglich und weisen daher eine sehr geringe Diffusionsrate auf. Die dynamische und statische (Gas)-Lebensdauer von Entladungsgefäßen wird jedoch dominant von deren Diffusionsrate bestimmt, deren Einfluss zunimmt mit kleiner werdendem Gasvolumen im Entladungsgefäß. Das Hauptproblem stellen dabei bislang die verwendeten, in der Regel aus mehreren aneinander gepressten Elementen bestehenden Dichtungen (organische Spezialmaterialien oder weichgeglühte Metalldichtungen) dar. Die Entladungsröhre des erfindungsgemäßen Gasentladungslasers besitzt jedoch keine Dichtungen, sodass die damit verbundenen, zwangsläufig immer auftretenden Ausgasungen und Leckraten von Dichtungen vermieden sind. Weiterhin sind die Diffusionseigenschaften der Materialien aller beteiligten Komponenten so gewählt, dass die Zusammensetzung des Lasergases über einen sehr langen Zeitraum unkritisch bleibt und der erfindungsgemäße Gasentladungslaser eine hohe Lebensdauer besitzt und einige 100 Millionen Lichtpulse wartungsfrei erzeugen kann.

Weiterhin sind bei dem erfindungsgemäßen Gasentladungslaser alle Komponenten in ihrem Material so gewählt, dass sie alle Anforderungen der Ultrahochvakuumtechnik erfüllen und ein Ausheizen auf über 355 °C zulassen. Oberhalb dieser Temperatur, die in der Fachsprache auch als "zweite Wassergrenze" bezeichnet wird, werden auch beim Verdampfen des Wassers oberhalb von 100°C noch verbliebene Wasserdipole, die sich an der Innenwandung des Entladungsgefäßes festsetzen, zuverlässig aufgelöst und entfernt. Nach einem Ausheizen des Entladungsgefäßes über 355°C ist dieses damit in seinem Innern vollständig wasserfrei. Schäden durch verbliebenes Wasser sind somit zuverlässig vermieden. Das Entladungsgefäß kann daher mit unterschiedlichen Gasen, einschließlich Halogengasgemischen, in einem Druckbereich von 10⁴Pa bis 6x10⁵ Pa bar befüllt und über lange Zeiträume wartungsfrei betrieben werden.

Die stoffschlüssige Hartlotverbindung ergibt sich im Herstellungsverfahren durch einen Hartlötprozess (s.u.). Der Lötprozess zum Verbinden aller Komponenten läuft bevorzugt bei oberhalb 900 °C ab. Die unterschiedlichen Wäremeausdehnungskoeffizienten der Komponenten gestatten es nicht (oder machen den Fügeprozess extrem teuer), Justagegenauigkeiten von einigen Hundertsteln und Winkelgenauigkeiten von < 0,1° während der Herstellung des Gasentladungslasers reproduzierbar zu erreichen. Für den erfindungsgemäßen Gasentladungslaser wird ein einfacher Herstellungsprozess gewählt und eine Möglichkeit zur Fein- und Nachjustage im fertig prozessierten Zustand des Gasentladungslasers geschaffen. Diese besteht darin, dass die Hauptelektroden in Trägerwannen gehalten und mechanisch entkoppelt werden, die - genau wie die Trägerringe für die Spiegelresonatoren - durch eine dauerhafte plastische Verformung in ihrer Ausdehnung so eingestellt werden, dass der erzeugte Laserpulsstrahl optimal fokussiert und positioniert ist. Der Fertigungsaufwand wird dadurch günstig. Der Temperaturgang des Gasentladungslasers wird ausschließlich vom Entladungsrohr bestimmt und bleibt damit absolut vernachlässigbar. Über die Trägerwannen und -ringe ist auch im Betrieb eine Nachjustage ohne weiteres möglich.

In Ausführungsvarianten des erfindungsgemäßen Gasentladungslasers kann vorteilhaft vorgesehen sein, dass eine oder beide Hauptelektroden schneidenartig und/oder mit mehreren nebeneinander liegenden Öffnungen ausgebildet sind, die so gestaltet sind, dass die Stege zwischen um die Öffnungen herum einen konstante Breite aufweisen. Entlang dieser Stege wird dann der Entladungsstrom geführt und umgelenkt. Weiterhin können die beiden Hauptelektroden unterschiedliche Höhen aufweisen und die Gasentladungsstrecke außerhalb der Längsachse der Entladungsröhre angeordnet sein. Diese unsymmetrische Elektrodengeometrie mit Durchgangsöffnungen ermöglicht eine passive oder walweise, wenn in die Öffnungen entsprechende Komponenten, beispielsweise Lüfterelemente, eingesetzt werden, eine aktive Gasumwälzung in der Entladungsröhre mit besonders positiver Wirkung auf die erreichbare Folgefrequenz und Stabilität des Gasentladungslasers bei gleichzeitiger Reduzierung der Abscheidungsraten an den optischen Resonatorspiegeln. Es wird ein stabiler Laserbetrieb auch bei hohen Pulsfolgeraten erzielt. Im Zusammenwirken mit der gasdichten Fügetechnologie kann durch die beschriebene Elektrodengeometrie eine besonders niederinduktive Speisung der Hauptentladung erfolgen. Dadurch können mit dem Gasentladungslaser nach der Erfindung Lichtpulspulse bis zu 50 ps erzeugt werden. Durch weitere Optimierungen der einzelnen Komponenten wird die Erzeugung von Lichtpulsen mit einer Dauer von 50 ps angestrebt. Während der Gasentladung erfolgt der Stromansatz nicht kontinuierlich auf den gerundeten Elektrodenkanten, sondern durch das Plasma fadenartig eingeschnürt. Dadurch entstehen an den Kontaktstellen sehr hohe Strombelastungen (> 1000 Acm⁻²), die zu einem Abdampfen des Elektrodenmaterials, beispielsweise Kupfer, an den Elektrodenkanten führen können. Der entstehende Metalldampf kann sich störend auf den Resonatorspiegeln niederschlagen und die Transmission der optischen Komponenten senken. Deshalb ist eine hochschmelzende Beschichtung der beiden Hauptelektroden im Bereich der Gasentladungsstrecke vorteilhaft. Der im Betrieb auftretende Metalldampfdruck wird durch eine derartige Beschichtung extrem reduziert. Gleichzeitig vermindert die Beschichtung die Aufnahme von Gasmolekülen in die Elektrodenoberflächen (gettern).

Die Gestaltung des Entladungsgefäßes bei dem beanspruchten Gasentladungslaser ermöglicht eine unabhängige Steuerung der Startbedingungen der Gasentladung. Es kann somit eine getrennte elektronische Vorionisierung erfolgen, die einen nahezu verschleißfreien Betrieb ermöglicht. Eine gegenüber bekannten Gasentladungslasern drei- bis fünffach größere Lebensdauer wird erreicht. Weitere Ausgestaltungen des erfindungsgemäßen Gasentladungslasers sehen deshalb vor, dass die beiden stabförmigen Hilfselektroden in Höhe der der Gasentladungsstrecke zugewandten Oberkante einer Hauptelektrode an jeweils zwei Trägerstiften als Entkoppel- und Halteelemente in Wandungslöchern der Entladungsröhre befestigt sind. Angesteuert wird der beanspruchte Gasentladungslaser durch einen besonders niederinduktiven, koaxialen Anregungskreis, der das Entladungsgefäß umschließt und alle elektrischen Bauelemente zur Energiespeicherung, zur schnellen Energieübertragung sowie den Schalter enthält. Dabei kann der elektrische Anregungskreis vorteilhaft als Blümleinschaltung mit mehreren Bandleiterkondensatoren ausgebildet sein, wobei die Bandleiterkondensatoren koaxial die Entladungsröhre umschließen. Für eine optimale elektrische Anregung ist eine homogene, lichtbogenfreie Entladung erforderlich. Zur Kompensation der schädlichen Magnetfelder (Induktivitäten) ist es bei der koaxialen Umschließung wichtig, dass sich die Strompfade ("Stromflächen") in den Bandleiterkondensatoren unter diametraler Ausrichtung (180°) entgegen stehen. Nur so kann gemeinsam mit den integrierten Halbleiterschaltern (s.u.) der notwendige Stromanstieg von 100 bis 500 kAµs⁻¹ (typisch 300 A/ns) erreicht werden. Bei der koaxialen Anordnung können die Bandleiterkondensatoren in einen Bandleiter integriert sein, der die Entladungsröhre koaxial umschließt und auch zumindest einen Halbleiterschalter aufnimmt, oder direkt auf weitere partielle Metallbeläge auf der Außenseite der Entladungsröhre aufgebracht sein. Für die Bandleiter kommen in der Regel spannungsfeste Isoliermaterialien wie Polyimid- oder Keramikfolien zum Einsatz. Ihre hohe Spannungsfestigkeit ( von einigen 10 kV ) und ein ε_{R} von 5 bis 300 gestatten den Aufbau von Bandleiterbaugruppen mit einem Wellenwiderstand im Ohmbereich. Dadurch können ultrakurze Lichtpulse bis 50 ps generiert werden können. Weiterhin kann die Schaltung der Hochstromentladung über zumindest einen miniaturisierten, direkt schaltenden Halbleiterschalter erfolgen, der zwischen die Bandleiterkondensatoren integriert ist. Bei dem Halbleiterschalter handelt es sich um ein direkt wirkendes Hochleistungsschaltelement auf Halbleiterbasis. Derartige Hochleistungsschaltelemente sind beispielsweise bekannt aus den Veröffentlichungen "High power semiconductor-based nano and subnanosecond pulse generator with a low delay time" (I. Grekhov et al., PPC-2003, Dallas), "Multi-kilovolt solid-state picosecond switch studies" (C.A. Frost, IEEE 2002, pp. 174-177) und "Simulation of semiconductor opening switch physics" (A. Engelko et al., IEEE 2002, pp 318-321). Der bei der Erfindung verwendete Halbleiterschalter gestattet dessen auf den Wellenwiderstand bezogene Einbindung in den umgebenden Anregungskreis. Die miniaturisierten Abmessungen des Halbleiterschalters (ca. 25 mm² mit einer Höhe von ca. 1 mm) erlauben zudem eine konstruktive Einbindung des Halbleiterschalters in die Schaltung. Der Wirkungsgrad wird entscheidend verbessert und das Bauvolumen heutigen Industrieansprüchen angepasst. In der Regel werden mehrere Halbleiterschalter in den Anregungskreis integriert.

Weitere Einzelheiten zum Aufbau des Gasentladungslasers nach der Erfindung und in diesem Zusammenhang auch zu einem bevorzugten Verfahren zu seiner Herstellung können zur Vermeidung von Wiederholungen dem nachfolgenden speziellen Beschreibungsteil entnommen werden.

### Ausführungsbeispiele

Der Gasentladungslaser und ein Herstellungsverfahren nach der Erfindung werden nachfolgend anhand der schematischen Figuren beispielhaft näher erläutert. Dabei zeigt:
- **Figur 1**: einen Längsschnitt durch den Gasentladungslaser,
- **Figur 2**: eine Seitenansicht des Gasentladungslasers,
- **Figur 3**: einen Querschnitt des Gasentladungslasers und
- **Figur 4**: ein Schaltschema des elektrischen Anregungskreises

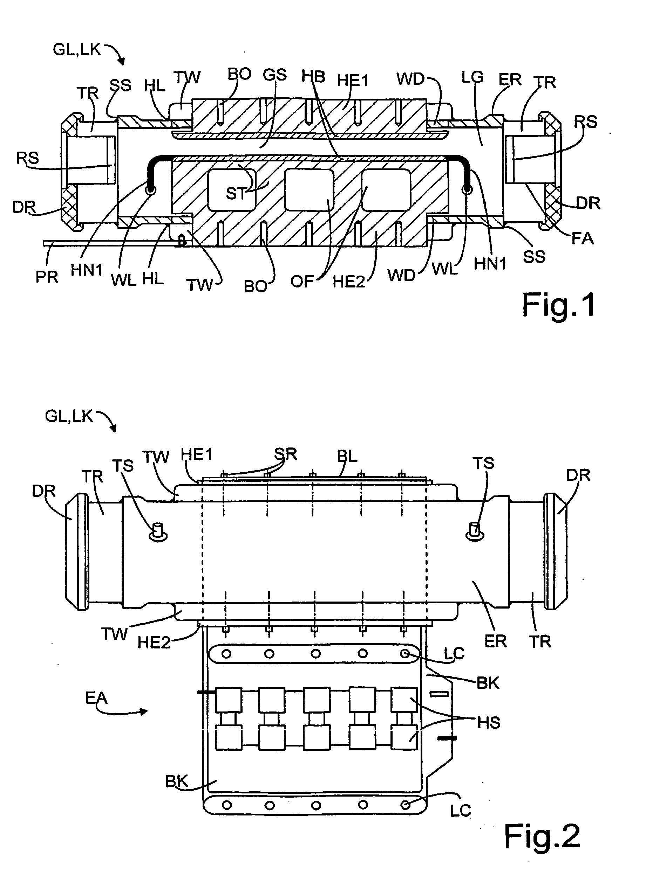

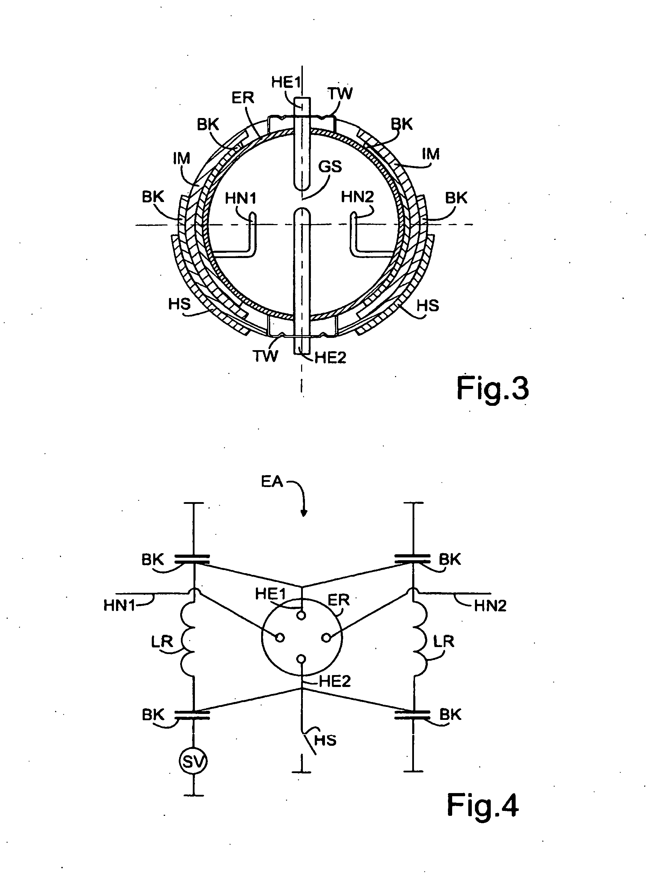

Die Figur **1** zeigt einen Gasentladungslaser **GL** im Bereich des Laserkopfes **LK** (ohne elektrischen Anregungskreis **EA**). Der Laserkopf **LK** umfasst eine gasdichte Entladungsröhre **ER** mit zylindrischer Geometrie aus Keramik, in der sich eine abgeschlossene Lasergasbefüllung LG befindet. Zum Evakuieren und Befüllen der Entladungsröhre **ER** ist ein Pumprohr **PR** vorgesehen, das beim fertig prozessierten Gasentladungslaser GL entfernt ist, wobei die Öffnung gasdicht verschweißt oder verlötet ist. Weiterhin befinden sich in der Entladungsröhre **ER** zwei sich axial erstreckende Hauptelektroden **HE1, HE2,** die sich diametral gegenüberliegen und zwischen sich eine Gasentladungsstrecke **GS** bilden. Über zwei seitlich von den Hauptelektroden **HE1, HE2** angeordnete stabförmige Hilfselektroden **HN1, HN2** (im Längsschnitt ist nur die eine Hilfselektrode **HN1** dargestellt) werden die Startbedingungen der Gasentladung durch elektronische Vorionisierung gesteuert. Der elektrische Anregungskreis **EA** ist in den **Figuren 3** und **4** dargestellt. An beiden Stirnseiten **SS** der Entladungsröhre **ER** befinden sich in axialer Ausrichtung zur Gasentladungstrecke **GS** optische Resonatorspiegel **RS,** im gewählten Ausführungsbeispiel aus Saphir (und daher bis oberhalb 355°C (zweite Wassergrenze) erwärmbar) und teilweise bzw. vollständig verspiegelt. Zur Lichtauskopplung ist ein Resonatorspiegel **RS** teildurchlässig ausgebildet.

Die beiden Hauptelektroden **HE1, HE2** sind in langlochartigen Wandungsdurchbrüchen **WD** in Trägerwannen **TW** gelagert, die die Hauptelektroden **HE1, HE2** gleichzeitig gegen die Entladungsröhre **ER** mechanisch entkoppeln. Dabei sind die Trägerwannen durch die Wahl des Materials plastisch verformbar ausgebildet, sodass sie eine Feinjustage der Hauptelektroden **HE1, HE2** im Endzustand ermöglichen. Die Feinjustage - beispielsweise nach einer Längenänderung aufgrund eines Ausheizvorganges (s.u.) - kann dann durch eine dauerhafte plastische Verformung der Trägerwannen **TW** erreicht werden. Gleiches gilt für verformbare Trägerringe **TR,** in denen die beiden Resonatorspiegel **RS** angeordnet sind, sodass auch diese im Endzustand über geschlitzte Druckringe **DR** feinjustiert werden können. Die Trägerwannen **TW** und Trägerringe **TR** sind mit zuvor auf die Entladungsröhre **ER** partiell aufgebrachten Metallbelägen (in den **Figuren** nicht weiter dargestellt) durch geschmolzenes Hartlot **HL** stoffschlüssig verbunden, sodass ein gleichsam einstückiger Laserkopf **LK** mit ausgezeichneter Gasdichtheit vorliegt. Dabei wird die Einstückigkeit auch im Bereich der Resonatorspiegel **RS** eingehalten, da diese über ihre Fassungen **FA** in die Trägerringe **TR** gasdicht eingeschweißt sind.

Zur Erzeugung einer homogenen und gleichmäßigen Gasentladung in der Gasentladungsstrecke **GS** sind die beiden Hauptelektroden **HE1, HE2** asymmetrisch und schneidenartig ausgebildet. Im gewählten Ausführungsbeispiel ist die Hauptelektrode **HE1** schmaler als die Hauptelektrode **HE2,** sodass die Gasentladungsstrecke **GS** oberhalb der zentralen Achse der Entladungsröhre **ER** liegt. Die Hauptelektrode **HE2** weist quadratische Öffnungen **OF** mit gerundeten Kanten auf, wobei die verbleibenden Stege **ST** eine konstante Breite aufweisen. An ihren der Gasentladungsstrecke **GS** zugewandten Seiten sind die Hauptelektroden **HE1, HE2** mit einer hochschmelzenden Beschichtung **HB** versehen, die Metallverdampfung durch Stromeinschnürungen und Einlagerung von Gasmolekülen verhindert. Auf ihrer von außen zugänglichen Seite weisen die Hauptelektroden **HE1, HE2** mehrere Bohrungen **BO** auf, die der Kontaktierung des elektrischen Anregungskreises **EA** dienen.

In Höhe der der Gasentladungsstrecke **GS** zugewandten Oberkante der Hauptelektrode **HE2** sind die beiden stab- oder drahtförmigen Hilfselektroden **HN1, HN2** (vergleiche **Figur 3****)** an jeweils zwei Trägerstiften **TS** (vergleiche **Figuren 2** und **3****)** befestigt, die als mechanisch entkoppelnde Halteelemente in Wandungslöchern **WL** der Entladungsröhre **ER** angeordnet sind. Auch die Trägerstifte **TS** sind durch geschmolzenes Hartlot mit entsprechenden partiellen Metallbelägen (in den **Figuren** nicht weiter dargestellt) auf der Entladungsröhre **ER** gasdicht verbunden.

Die **Figur 2** zeigt eine Seitenansicht des Gasentladungslasers **GL** mit dem elektrischen Entladungskreis **EA** in halb abgeklapptem Zustand (die Hinterführung hinter der Entladungsröhre **ER** ist in der **Figur 2** gestrichelt dargestellt), gleiche Bezugszeichen sind der **Figur 1** zu entnehmen. Im gewählten Ausführungsbeispiel ist ein Bandleiter **BL** ("strip conductor") mit integrierten Bandleiterkondensatoren **BK** und Halbleiterschaltern **HS** dargestellt. Der Kontakt zu den Hauptelektroden **HE1, HE2** wird durch Schraubverbindungen hergestellt, wobei die Schrauben **SR** durch Löcher **LC** in die Bohrungen **BO** der Hauptelektroden **HE1, HE2** eingreifen. Die Hilfselektroden **HN1, HN2** werden über die Trägerstifte **TS** direkt kontaktiert.

Die **Figur 3** zeigt den Gasentladungslaser gemäß **Figur 2** im Querschnitt mit koaxial geschlossenem elektrischem Anregungskreis **EA.** Zu erkennen sind die elektrisch isolierende Entladungsröhre **ER,** die beiden Hauptelektroden **HE1, HE2,** die beiden Hilfselektroden **HN1, HN2** mit den Trägerwannen **TW,** Bandleiterkondensatoren **BK** mit Isolier- und Massezwischenlagen **IM** sowie die Halbleiterschalter **HS.** Dabei sind die Bandleiterkondensatoren BK unter diametraler Entgegenrichtung ihrer Strompfade angeordnet, sodass sich die Induktivitäten bis auf eine vernachlässigbare Restinduktivität **LR** kompensieren. Weitere Elemente gemäß **Figur 2** wurden der besseren Überschaubarkeit halber in der **Figur 3** nicht dargestellt.

In der **Figur 4** ist der elektrische Schaltplan des koaxialen elektrischen Anregungskreises **EA** schematisch aufgezeigt. Exemplarisch sind vier Bandleiterkondensatoren **BK** und ein Halbleiterschalter **HS** für die Summe der entsprechenden Komponenten dargestellt. Die elektrische Energie wird von einer Spannungsversorgung **SV** geliefert. Die Leistungsdaten des Halbleiterschalters **HS** können folgendermaßen aussehen:

| | |
|---|---|
| Betriebsspannung (Schaltspannung) | 12.000 V bis 18.000 V |
| Sichere Sperrspannung | UB + 15 % |
| Einschaltzeit | 12 ns bis 14 ns |
| Sperrverzögerungszeit | max. 5 µs |
| Zeit Jitter | max. 1,5 ns, optimal 600 ps |
| Wiederholfrequenz | 100 pps bis 250 pps |
| Peakstrom (250 ns) | 1.800 A bis 5.500 A |
| Umkehrstrom (200 ns) | 40 % Peakstrom |
| Stromanstieg | größer 120 A ns⁻¹ |

Nach den ausführlichen Erläuterungen zum Aufbau des Gasentladungslasers soll abschließend noch kurz auf ein bevorzugtes Verfahren zu seiner Herstellung eingegangen werden. Dieses kann folgendermaßen ablaufen:

### Verfahrensschritt I

Auf die Außenseite der Entladungsröhre **ER** werden partiell Metallbeläge (in den **Figuren** nicht weiter dargestellt) aufgebracht, auf denen später die verschiedenen Trägerkomponenten festgelötet werden.

### Verfahrensschritt II

In jede Stirnseite **SS** der Entladungsröhre **ER** werden unter Zwischenlage von Hartlotringen die verformbaren Trägerringe **TR** zur Aufnahme der optischen Resonatorspiegel **RS** eingesetzt.

### Verfahrensschritt III

In jeden Wandungsdurchbruch **WD** der Entladungsröhre **EA** werden unter Zwischenlage von Hartlotfolien die verformbaren Trägerwannen **TW** eingesetzt. Diese dienen als mechanisch entkoppelnde Halteelemente für die Hauptelektroden **HE1, HE1,** die wiederum unter Zwischenlage von Hartlotfolien in die Trägerwannen **TW** eingesetzt werden.

### Verfahrensschritt IV

In dafür vorgesehene Wandungslöcher **WL** der Entladungsröhre **ER** werden Trägerstifte **TS,** die als mechanisch entkoppelnde Halteelemente für die stabförmigen Hilfselektroden **HN1, HN2** dienen, unter Zwischenlage von Hartlothülsen eingesetzt. Die Hilfselektroden **HN1, HN2** werden ihrerseits unter Zwischenlage von Hartlothülsen auf die Trägerstifte **TS** aufgesteckt.

### Verfahrensschrift V

Alle Komponenten, die zuvor durch Zwischenlage von Hartlot miteinander kontaktiert wurden, werden durch einen Lötofen geführt. Bei einer Löttemperatur oberhalb von 900°C werden die aneinander gepressten Komponenten miteinander hartverlötet (Trägerwannen **TW,** Trägerringe **TR** und Trägerstifte **TS** mit den entsprechenden partiellen Metallbelägen (in den **Figuren** nicht weiter dargestellt) auf der Entladungsröhre **ER,** Hauptelektroden **HN1, HN2** mit den Trägerwannen **TW,** Hilfselektroden **HN1, HN2** mit den Trägerstiften **TS** und Trägerringe **TR** mit den Stirnseiten der Entladungsröhre **ER).**

### Verfahrensschritt VI

In die beiden eingelöteten Trägerringe **TR** werden die Fassungen **FA** der verspiegelten optischen Resonatorspiegel **RS** gasdicht eingeschweißt. Dabei wird ein solches Material für die Resonatorspiegel **RS** ausgesucht, das ein Ausheizen oberhalb 355°C zulässt.

### Verfahrensschritt VII

Über das Pumprohr **PR** wird die Entladungsröhre **ER** bis in den Ultrahochvakuumbereich evakuiert. Gleichzeitig wird die Entladungsröhre **ER** auf eine Temperatur oberhalb 355°C ausgeheizt, um Wasser in der Entladungsröhre **ER** rückstandsfrei zu entfernen.

### Verfahrensschritt VIII

Die Entladungsröhre **ER** wird mit dem Wellenlängen bestimmenden Laser- und Puffergas über das Pumprohr **PR** befüllt. Anschließend wird das Pumprohr **PR** gasdicht verschlossen (verschweißt).

### Verfahrensschritt IX

An den eingelöteten Trägerringe **TR,** die mit den Resonatorspiegeln **RS** verschweißt werden, werden Druckringe **DR** befestigt. Diese weisen beispielsweise Schrauben zur Druckausübung auf die verformbaren Trägerringe **TR** auf.

### Verfahrensschritt X

Es erfolgt jetzt eine Feinjustage über die Trägerwannen **TW** und die Trägerringe **TR** über deren dauerhafte plastische Verformung.

### Verfahrensschritt XI

Abschließend wird der elektrische Anregungskreis **EA** auf die Entladungsröhre **ER** montiert und mit den Haupt- und Hilfselektroden **HE1, HE2, HN1, HN2** elektrisch kontaktiert. Dabei kann die Anbringung des elektrischen Anregungskreis **EA** als Blümleinschaltung durch Integration von Bandleiterkondensatoren **BK** in einen Bandleiter **BL,** der gemäß **Figur 2** kontaktiert wird, oder durch direktes Aufbringen auf weitere partielle Metallbeläge **MB** koaxial unter diametraler Entgegenrichtung der Strompfade in den Bandleiterkondensatoren **BK** auf der Außenseite der Entladungsröhre **ER** erfolgen. Die miniaturisierten, direkt schaltenden Halbleiterschalter **HS** werden zwischen den Bandleiterkondensatoren **BK** auf dem Bandleiter **BL** oder direkt auf der Endladungsröhre **ER** kontaktiert. Nach der Kontaktierung mit dem elektrischen Anregungskreis **EA** wird der Gasentladungslaser **GL** in einem Gehäuse angeordnet, fertig montiert und ist nach Anschluss an die Spannungsversorgung **SV** einsatzbereit.

### Bezugszeichenliste

- **BL**: Bandleiter
- **BK**: Bandleiterkondensator
- **BO**: Bohrung
- **EA**: elektrischer Anregungskreis
- **ER**: Entladungsröhre
- **FA**: Fassung
- **DR**: Druckring
- **GL**: Gasentladungslaser
- **GS**: Gasentladungsstrecke
- **HB**: hochschmelzende Beschichtung
- **HE**: Hauptelektrode
- **HL**: Hartlot
- **HN**: Hilfselektrode
- **HS**: Halbleiterschalter
- **IM**: Isolier- und Massezwischenlage
- **LC**: Loch
- **LG**: Lasergasbefüllung
- **LK**: Laserkopf
- **LR**: Restinduktivität
- **OF**: Öffnung
- **PR**: Pumprohr
- **RS**: Resonatorspiegel
- **SR**: Schraube
- **SS**: Stirnseite
- **ST**: Steg
- **SV**: Spannungsquelle
- **TR**: Trägerring
- **TS**: Trägerstift
- **TW**: Trägerwanne
- **WD**: Wandungsdurchbruch
- **WL**: Wandungsloch

## Patentansprüche

1. Transversal elektrisch angeregter Gasentladungslaser (GL) zur Erzeugung von Lichtpulsen mit hoher Pulsfolgefrequenz mit zumindest folgenden Komponenten :
• gasdichte Entladungsröhre (ER) aus einem keramischen Werkstoff mit einer abgeschlossenen Lasergasbefüllung (LG),
• zwei sich axial erstreckende Hauptelektroden (HE1, HE2), die unter Bildung einer Gasentladungsstrecke (GS) in der Entladungsröhre (ER) angeordnet sind,
• zwei stabförmige, sich parallel zu den Hauptelektroden (HE1, HE2) erstreckende Hilfselektroden (HN1, HN2) in der Entladungsröhre (ER) zur Steuerung der Startbedingungen der Gasentladung durch elektronische Vorionisierung,
• elektrischer Anregungskreis (EA), der auf die Hauptelektroden (HE1, HE2) und die Hilfselektroden (HN1, HN2) einwirkt und einen Schalter (HS) umfasst, zur Erzeugung einer schnellen, aus Energiespeichem gespeisten Hochstromentladung,
• zwei optische Resonatorspiegel (RS) an den Stirnseiten (SS) der Entladungsröhre (ER) in axialer Ausrichtung zur Gasentladungsstrecke (GS), wobei ein Resonatorspiegel (RS) zur Lichtauskopplung teildurchlässig ausgebildet ist,
**dadurch gekennzeichnet, dass**
mechanisch entkoppelnde Halteelemente für die Hauptelektroden (HE1, HE2) in Form von dauerhaft plastisch verformbaren Trägerwannen (TW) in diametral gegenüberliegenden Wandungsdurchbrüchen (WD) der Entladungsröhre (ER) angeordnet sind und dass die Entladungsröhre (ER) an beiden Stirnseiten (SS) mit dauerhaft plastisch verformbaren Trägerringen (TR), in die die optischen Resonatorspiegel (RS) eingeschweißt sind, und an ihrem Umfang mit den Trägerwannen (TW) durch geschmolzenes und mit entsprechend partiell angeordneten Metallbelägen auf der keramischen Entladungsröhre (ER) verbundenes Hartlot (HL) stoffschlüssig verbunden ist, wobei alle Komponenten ultrahochvakuumtauglich und über 355°C ausheizbar sind.

2. Transversal elektrisch angeregter Gasentladungslaser nach Anspruch 1,
**dadurch gekennzeichnet, dass**
eine oder beide Hauptelektroden (HE1, HE2) schneidenartig und/oder mit mehreren nebeneinander liegenden Öffnungen (OF) ausgebildet sind, die so gestaltet sind, dass die Stege (ST) um die Öffnungen (OF) herum eine konstante Breite aufweisen.

3. Transversal elektrisch angeregter Gasentladungslaser nach Anspruch 2,
**dadurch gekennzeichnet, dass**
in den Öffnungen (OF) Komponenten zur aktiven Gasumwälzung angeordnet sind.

4. Transversal elektrisch angeregter Gasentladungslaser nach einem der Ansprüche 1 bis 3,
**dadurch gekennzeichnet, dass**
die beiden Hauptelektroden (HE1, HE2) unterschiedliche Höhen aufweisen und die Gasentladungsstrecke (GS) außerhalb der Längsachse der Entladungsröhre (ER) angeordnet ist.

5. Transversal elektrisch angeregter Gasentladungslaser nach einem der Ansprüche 1 bis 4,
**dadurch gekennzeichnet, dass**
die beiden Hauptelektroden (HE1, HE2) im Bereich der Gasentladungsstrecke (GS) mit einer hochschmelzenden Beschichtung (HB) versehen sind.

6. Transversal elektrisch angeregter Gasentladungslaser nach einem der Ansprüche 1 bis 5,
**dadurch gekennzeichnet, dass**
die beiden stabförmigen Hilfselektroden (HN1, HN2) in Höhe der der Gasentladungsstrecke (GS) zugewandten Oberkante einer Hauptelektrode (HE2) an jeweils zwei Trägerstiften (TS) als mechanisch entkoppelnde Halteelemente in Wandungslöchern (WL) der Entladungsröhre (ER) befestigt sind.

7. Transversal elektrisch angeregter Gasentladungslaser nach einem der Ansprüche 1 bis 6,
**dadurch gekennzeichnet, dass**
der elektrische Anregungskreis (EA) als Blümleinschaltung mit mehreren Bandleiterkondensatoren (BK) ausgebildet ist, wobei die Bandleiterkondensatoren (BK) koaxial unter diametraler Entgegenrichtung ihrer Strompfade die Entladungsröhre (ER) umschließen und der Schalter als zumindest ein direkt schaltender Halbleiterschalter (HS) mit einer Fläche in einem Bereich von 25 mm². bei einer Höhe in einem Bereich von 1 mm ausgebildet und zwischen die Bandleiterkondensatoren (BK) integriert ist.

8. Transversal elektrisch angeregter Gasentladungslaser nach Anspruch 7,
**dadurch gekennzeichnet, dass**
die Bandleiterkondensatoren (BK) in einen Bandleiter (BL) integriert sind, der die Entladungsröhre (ER) koaxial umschließt und auch den zumindest einen Halbleiterschalter (HS) aufnimmt, oder dass die Bandleiterkondensatoren (BK) direkt auf weitere partielle Metallbeläge auf der Außenseite der Entladungsröhre (ER) aufgebracht sind.

9. Verfahren zur Herstellung eines elektrisch angeregten Gasentladungslasers zur Erzeugung von Lichtpulsen mit hoher Pulsfolgefrequenz mit zumindest folgenden Komponenten :
• gasdichte Entladungsröhre (ER) aus einem keramischen Werkstoff mit einer abgeschlossenen Lasergasbefüllung (LG),
• zwei sich axial erstreckende Hauptelektroden (HE1, HE2), die unter Bildung einer Gasentladungsstrecke (GS) in der Entladungsröhre (ER) angeordnet sind,
• zwei stabförmige, sich parallel zu den Hauptelektroden (HE1, HE2) erstreckende Hilfselektroden (HN1, HN2) in der Entladungsröhre (ER) zur Steuerung der Startbedingungen der Gasentladung durch elektronische Vorionisierung,
• elektrischer Anregungskreis (EA), der auf die Hauptelektroden (HE1, HE2) und die Hilfselektroden (HN1, HN2) einwirkt und einen Schalter (HS) umfasst; zur Erzeugung einer schnellen, aus Energiespeichern gespeisten Hochstromentladung,
• zwei optische Resonatorspiegel (RS) an den Stirnseiten (SS) der Entladungsröhre (ER) in axialer Ausrichtung zur Gasentladungsstrecke (GS), wobei ein Resonatorspiegel (RS) zur Lichtauskopplung teildurchlässig ausgebildet ist,
**gekennzeichnet durch** folgende Verfahrensschritte:
I. Aufbringen von partiellen Metallbelägen an Stellen zu befestigender Komponenten auf die Außenseite der keramischen Entladungsröhre (ER),
II. Einsetzen von dauerhaft plastisch verformbaren Trägerringen (TR) zur Aufnahme der optischen Resonatorspiegel (RS) in jede Stirnseite (SS) der Entladungsröhre (ER) unter Zwischenlage von Hartlotringen,
III. Einsetzen von dauerhaft plastisch verformbaren Trägerwannen (TW) als mechanisch entkoppelnde Halteelemente für die Haüptelektroden (HE1, HE2) in jeden Wandungsdurchbruch (WD) und der Hauptelektroden (HE1, HE2) in die Trägerwannen (TW) unter Zwischenlage von Hartlotfolien,
**IV**. Einsetzen von Trägerstiften (TS) als mechanisch entkoppelnde Halteelemente für die stabförmigen Hilfselektroden (HN1, HN2) in Wandungslöcher (WL) der Entladungsröhre (ER) und der Hilfselektroden (HN1, HN2) auf die Trägerstifte (TS) unter Zwischenlage von Hartlothülsen,
**V.** Hartverlöten der Trägerringe (TR),Trägerwannen (TW) und Trägerstifte (TS) mit entsprechenden partiellen Metallbelägen auf der Entladungsröhre (ER), der Hauptelektroden (HE1, HE2) mit den Trägerwannen (TW) und der Hilfselektroden (HN1, HN2) mit den Trägerstiften (TS) in einem gesteuerten Lötofen,
**VI.** gasdichtes Einschweißen der gefassten und verspiegelten optischen Resonatorspiegel (RS), die Temperaturen oberhalb 355°C aushalten, in die beiden eingelöteten Trägerring (TR),
**VII.** Auspumpen der Entladungsröhre (ER) bis in den Ultrahochvakuumbereich über ein Pumprohr (PR) und gleichzeitiges Ausheizen der Entladungsröhre (ER) auf eine Temperatur oberhalb 355°C,
**VIII.** Befüllen der Entladungsröhre (ER) mit Laser- und Puffergas (LG) über das Pumprohr (PR), Entfernen des Pumprohrs (PR) und gasdichtes Verschließen der Öffnung,
**IX.** Befestigen von Druckringen (DR) auf die eingelöteten und mit den Resonatorspiegeln (RS) verschweißten Trägerringe (TR),
**X.** Feinjustieren der Hauptelektroden (HE1, HE2) und der Resonatorspiegel (RS) **durch** dauerhaft plastische Verformung der Trägerwannen (TW) und Trägerringe (TR) und
**XI.** Anbringung des elektrischen Anregungskreises (EA) und Kontaktierung mit den Haupt- und Hilfselektroden (HE1, HE2, HN1, HN2).

10. Verfahren nach Anspruch 9,
**dadurch gekennzeichnet, dass**
das Hartverlöten gemäß Verfahrensschritt V bei einer Temperatur oberhalb 900°C erfolgt.

11. Verfahren nach Anspruch 9 oder 10,
**dadurch gekennzeichnet, dass**
die Anbringung des elektrischen Anregungskreises (EA) gemäß Verfahrensschritt XI als Blümleinschaltung durch Integration von Bandleiterkondensatoren (BK) in einen Bandleiter (BL) oder durch direktes Aufbringen auf weitere partielle Metallbeläge koaxial unter diametraler Entgegenrichtung der Strompfade in den Bandleiterkondensatoren (BK) auf der Außenseite der Entladungsröhre (ER) erfolgt und zum Schalten der Hochstromentladung zumindest ein direkt schaltender Halbleiterschalter (HS) mit einer Fläche in einem Bereich von 25 mm² bei einer Höhe in einem Bereich von 1 mm zwischen den Bandleiterkondensatoren (BK) auf dem Bandleiter (BL) oder direkt auf der Endladungsröhre (ER) angeordnet wird.

12. Verfahren nach einem der Ansprüche 9 bis 11,
**dadurch gekennzeichnet, dass**
Komponenten zur aktiven Gasumwälzung in Öffnungen (OF) in den Hauptelektroden (HE1, HE2) eingesetzt werden.

## Claims

1. Electrically excited gas discharge laser (GL) for generating high-repetition frequency light pulses, having at least the following components:
• gas-tight discharge tube (ER) made of a ceramic material with a sealed container (LG) filled with a laser gas,
• two axially extending main electrodes (HE1, HE2) that are arranged so as to form a gas discharge path (GS) in the discharge tube (ER),
• two rod-shaped auxiliary electrodes (HN1, HN2) extending parallel to the main electrodes (HE1, HE2) in the discharge tube (ER) for controlling the starting conditions of the gas discharge by electronic pre-ionisation,
• electrical excitation circuit (EA), which acts on the main electrodes (HE1, HE2) and the auxiliary electrodes (HN1, HN2) and comprises a switch (HS) for generating a fast high-current discharge fed from energy accumulators,
• two optical resonator mirrors (RS) on the front faces (SS) of the discharge tube (ER) in axial alignment relative to the gas discharge path (GS), one resonator mirror (RS) being constructed so as to be partially transmissible to the light coupled out,
**characterized in that**
mechanically decoupling retaining elements for the main electrodes (HE1, HE2) in the form of permanently plastically deformable carrier baths (TW) are arranged in diametrically opposite holes (WD) in the walls of the discharge tube (ER), and that the discharge tube (ER) is integrally jointed on both front faces (SS) to permanently plastically deformable carrier rings (TR), into which the optical resonator mirrors (RS) are welded, and at its circumference to the carrier baths (TW), by means of fused hard solder (HL) joined to correspondingly partially arranged metal coatings on the ceramic discharge tube (ER), wherein all components are ultra-high vacuum-suitable and can be sintered above 355°C.

2. Electrically excited gas discharge laser according to Claim 1,
**characterized in that**
one or both main electrodes (HE1, HE2) have a blade-like construction and/or have multiple openings (OF) lying next to one another, shaped in such a way that the webs (ST) around the openings (OF) have a constant width.

3. Electrically excited gas discharge laser according to Claim 2,
**characterized in that**
components for re-circulating the active gas are arranged in the openings (OF).

4. Electrically excited gas discharge laser according to one of Claims 1 to 3,
**characterized in that**
the two main electrodes (HE1, HE2) have different heights and the gas discharge path (GS) is arranged outside of the longitudinal axis of the discharge tube (ER).

5. Electrically excited gas discharge laser according to one of Claims 1 to 4,
**characterized in that**
both the main electrodes (HE1, HE2) are fitted with a high-melting point coating (HB) in the area of the gas discharge path (GS).

6. Electrically excited gas discharge laser according to one of Claims 1 to 5,
**characterized in that**
both the rod-shaped auxiliary electrodes (HN1, HN2), at the level of the top edge facing the gas discharge path (GS) of a main electrode (HE2), are secured in through holes (WL) in the walls of the discharge tube (ER) on two carrier pins (TS) respectively, acting as mechanically decoupling retaining elements.

7. Electrically excited gas discharge laser according to one of Claims 1 to 6,
**characterized in that**
the electrical excitation circuit (EA) is constructed as a daisy chain circuit with multiple ribbon cable capacitors (BK), wherein said ribbon cable capacitors (BK) coaxially surround the discharge tube (ER) in a diametrically opposite direction to their current paths, and the switch is constructed as at least one directly switching semiconductor switch (HS) with a surface area in the region of 25 mm² and a height in the region of 1 mm and is integrated between the ribbon cable capacitors (BK).

8. Electrically excited gas discharge laser according to Claim 7,
**characterized in that**
the ribbon cable capacitors (BK) are integrated into a ribbon cable (BL), which coaxially surrounds the discharge tube (ER) and also receives the at least one semiconductor switch (HS), or that the ribbon cable capacitors (BK) are applied directly on to further partial metal coatings on the outside of the discharge tube (ER).

9. Method for the production of an electrically excited gas discharge laser for generating high-repetition frequency light pulses with at least the following components:
• gas-tight discharge tube (ER) made of a ceramic material with a sealed container (LG) filled with a laser gas,
• two axially extending main electrodes (HE1, HE2) that are arranged so as to form a gas discharge path (GS) in the discharge tube (ER),
• two rod-shaped auxiliary electrodes (HN1, HN2) extending parallel to the main electrodes (HE1, HE2) in the discharge tube (ER) for controlling the starting conditions of the gas discharge by electronic pre-ionisation,
• electrical excitation circuit (EA), which acts on the main electrodes (HE1, HE2) and the auxiliary electrodes (HN1, HN2) and comprises a switch (HS) for generating a fast high-current discharge fed from energy accumulators,
• two optical resonator mirrors (RS) on the front faces (SS) of the discharge tube (ER) in axial alignment relative to the gas discharge path (GS), one resonator mirror (RS) being constructed so as to be partially transmissible to the light coupled out,
**characterized by** the following procedure steps:
**I.** application of partial metal coatings at points where components are to be attached on the outside of the ceramic discharge tube (ER),
**II.** insertion of permanently plastically deformable carrier rings (TR) for accommodating the optical resonator mirrors (RS) into each front face (SS) of the discharge tube (ER) by the interposition of hard solder rings,
**III.** insertion of permanently plastically deformable carrier baths (TW) as mechanically decoupling retaining elements for the main electrodes (HE1, HE2) into each through hole (WD) in the wall and of the head electrodes (HE1, HE2) into the carrier baths (TW) by the interposition of hard solder foils,
**IV.** insertion of carrier pins (TS) as mechanically decoupling retaining elements for the rod-shaped auxiliary electrodes (HN1, HN2) into wall holes (WL) of the discharge tube (ER), and insertion of the auxiliary electrodes (HN1, HN2) on to the carrier pins (TS) by the interposition of hard solder sleeves,
**V.** hard soldering of the carrier rings (TR), carrier baths (TW) and carrier pins (TS) to corresponding partial metal coatings on the discharge tube (ER), of the main electrodes (HE1, HE2) to the carrier baths (TW) and of the auxiliary electrodes (HN1, HN2) to the carrier pins (TS) in a controlled soldering oven,
**VI.** gas-tight welding of the enclosed and mirrored optical resonator mirrors (RS), which withstand temperatures above 355°C, into both the soldered-in carrier rings (TR),
**VII.** evacuation of the discharge tube (ER) by pumping into the ultra-high vacuum range via a pump pipe (PR) and simultaneous sintering of the discharge tube (ER) to a temperature above 355° C,
**VIII.** filling of the discharge tube (ER) with laser gas and buffer gas (LG) via the pump pipe (PR), removal of the pump pipe (PR) and gas-tight sealing of the opening,
**IX.** securing of pressure rings (DE) on to the soldered-in carrier rings (TR) welded to the resonator mirrors (RS),
**X.** fine adjustment of the main electrodes (HE1, HE2) and the resonator mirrors (RS) by means of permanently plastically deformation of the carrier baths (TW) and carrier rings (TR), and
**XI.** mounting of the electrical excitation circuit (EA) and contacting to the main electrodes and auxiliary electrodes (HE1, HE2, HN1, HN2).

10. Method according to Claim 9,
**characterized in that**
the hard soldering is carried out in accordance with method step V at a temperature greater than 900°C.

11. Method according to Claim 9 or 10,
**characterized in that**
the mounting of the electrical excitation circuit (EA) in accordance with method step XI is carried out as a daisy chain circuit, by integration of ribbon cable capacitors (BK) into a ribbon cable (BL) or by direct application coaxially on to further partial metal coatings in a diametrically opposite direction to their current paths in the ribbon cable capacitors (BK) on the outside of the discharge tube (ER), and in order to switch the high current discharge at least one directly switching semiconductor switch (HS) with a surface area in the region of 25 mm² and a height in the region area of 1 mm is arranged between the ribbon cable capacitors (BK) on the ribbon cable (BL) or directly on the discharge tube (ER).

12. Method according to one of the Claims 9 to 11,
**characterized in that**
components for active recirculation of the gas in openings (OF) are used in the main electrodes (HE1, HE2).

## Revendications

1. Laser à décharge gazeuse transversal (GL), excité électriquement, pour la production d'impulsions lumineuses à fréquence de trains d'impulsions élevée comprenant au moins les composants suivants :
• tube de décharge (ER) étanche au gaz à base d'un matériau céramique avec un remplissage de gaz pour laser (GL) fermé,
• deux électrodes principales (HE1, HE2) s'étendant axialement, qui sont disposées dans le tube de décharge (ER) en formant un tronçon de décharge gazeuse (GS),
• deux électrodes auxiliaires (HE1, HE2) en forme de barre, s'étendant parallèlement aux électrodes principales (HN1, HN2) dans le tube de décharge (ER) pour la commande des conditions de démarrage de la décharge gazeuse par pré-ionisation électronique,
• circuit d'excitation électrique (EA), qui agit sur les électrodes principales (HE1, HE2) et les électrodes auxiliaires (HN1, HN2) et comporte un commutateur (SH), pour la production d'une décharge de courant élevé rapide, alimentée à partir d'accumulateurs d'énergie
• deux miroirs résonateurs (RS) optiques sur les faces frontales (SS) du tube de décharge (ER) en alignement axial avec le tronçon de décharge gazeuse (GS), un miroir résonateur (RS) étant conçu avec une argenture semi-transparente pour l'extraction de lumière,
**caractérisé en ce que**
des éléments de retenue assurant une extraction mécanique pour les électrodes principales ( (HE1, HE2) sous la forme de cuves supports (TW) pouvant subir une déformation plastique durable sont disposés dans des percements de paroi (WD) diamétralement opposés du tube de décharge (ER) et **en ce que** le tube de décharge (ER) est relié par adhésion de matière sur les deux faces frontales (SS) à des bagues supports (TR) pouvant subir une déformation plastique durable, dans lesquelles les miroirs résonateurs (RS) optiques sont soudés, et sur leur pourtour aux cuves supports (TW) par métal d'apport de brasage fort (HL) fondu et relié à des revêtements métalliques disposés partiellement de façon appropriée sur le tube de décharge (ER) céramique, tous les composants étant compatibles avec l'ultravide et pouvant être chauffés au-delà 355°C.

2. Laser à décharge gazeuse transversal, excité électriquement, selon la revendication 1,
**caractérisé en ce que**
une ou les deux électrodes principales (HE1, HE2) sont conçues en forme de lame et/ou avec plusieurs ouvertures (OF) juxtaposées, qui sont conçues de telle sorte que les nervures (ST) présentent une largeur constante autour des ouvertures (OF).

3. Laser à décharge gazeuse transversal, excité électriquement selon la revendication 2,
**caractérisé en ce que**
des composants sont disposés dans les ouvertures (OF) pour la circulation active du gaz.

4. Laser à décharge gazeuse transversal, excité électriquement, selon l'une quelconque des revendications 1 à 3,
**caractérisé en ce que**,
les deux électrodes principales (HE1, HE2) présentent différentes hauteurs et le tronçon de décharge gazeuse (GS) est disposé à l'extérieur de l'axe longitudinal du tube de décharge (ER).

5. Laser à décharge gazeuse transversal, excité électriquement, selon l'une quelconque des revendications 1 à 4,
**caractérisé en ce que**
les deux électrodes principales (HE1, HE2) sont dotées d'un revêtement à point de fusion élevé (HB) dans la zone du tronçon de décharge gazeuse (GS).

6. Laser à décharge gazeuse transversal, excité électriquement, selon l'une quelconque des revendications 1 à 5,
**caractérisé en ce que**
les deux électrodes auxiliaires (HN1, HN2) en forme de barre sont fixées à la hauteur de l'arête supérieure, tournée vers le tronçon de décharge gazeuse (GS), d'une électrode principale (HE2) sur respectivement deux broches supports (TS) comme éléments de retenue à extraction mécanique dans des trous de paroi (WL) du tube de décharge (ER).

7. Laser à décharge gazeuse transversal, excité électriquement, selon l'une quelconque des revendications 1 à 6,
**caractérisé en ce que**
le circuit d'excitation (EA) électrique est conçu sous forme de circuit du type Blümlein avec plusieurs condensateurs à conducteur plat (BK), les condensateurs à conducteur plat (BK) entourant le tube de décharge (ER) de façon coaxiale avec une direction diamétralement opposée de leurs trajets de courant et l'interrupteur étant conçu sous forme d'au moins un commutateur statique (HS) à commutation directe avec une surface de l'ordre de 25 mm² à une hauteur de l'ordre de 1 mm et étant intégré entre les condensateurs à conducteur plat (BK).

8. Laser à décharge gazeuse transversal, excité électriquement, selon la revendication 7,
**caractérisé en ce que**
les condensateurs à conducteur plat (BK) sont intégrés dans un conducteur plat (BL), qui entoure le tube de décharge (ER) de façon coaxiale et reçoit également le au moins un commutateur statique (HS) ou **en ce que** les condensateurs à conducteur plat (BK) sont appliqués directement sur d'autres revêtements mécaniques partiels sur le côté extérieur du tube de décharge (ER).

9. Procédé pour fabriquer un laser à décharge gazeuse excité électriquement pour la production d'impulsions lumineuses avec une fréquence de trains d'impulsions élevée comprenant au moins les composants suivants :
• tube de décharge (ER) étanche au gaz à base d'un matériau céramique avec un remplissage de gaz pour laser (LG) fermé,
• deux électrodes principales (HE1, HE2) s'étendant axialement, qui sont disposées dans le tube de décharge (ER) en formant un tronçon de décharge gazeuse (GS),
• deux électrodes auxiliaires (HE1, HE2) en forme de barre, s'étendant parallèlement aux électrodes principales (HN1, HN2), dans le tube de décharge (ER) pour la commande des conditions de démarrage de la décharge gazeuse par pré-ionisaton électronique,
• circuit d'excitation (EA) électrique, qui agit sur les électrodes principales (HE1, HE2) et les électrodes auxiliaires (HN1, HN2) et comporte un commutateur (HS) pour la production d'une décharge de courant élevé rapide, alimentée à partir d'accumulateurs d'énergie,
• deux miroirs résonateurs (RS) optiques sur les faces frontales (SS) du tube de décharge (ER) en alignement axial avec le tronçon de décharge gazeuse (GS), un miroir résonateur (RS) étant conçu avec une argenture semi-transparente pour l'extraction de la lumière,
**caractérisé par** les étapes de procédé suivantes :
**I.** Application de revêtements métalliques partiels à des emplacements de composants à fixer sur le côté extérieur du tube de décharge (ER) céramique,
**II.** Utilisation de bagues supports (TR) pouvant subir une déformation plastique durable pour le logement des miroirs résonateurs (RS) optiques dans chaque face frontale (SS) du tube de décharge (ER) avec intercalation de bagues pour brasage fort,
**III.** Utilisation de cuves supports (TW) pouvant subir une déformation plastique durable comme éléments de retenue avec extraction mécanique pour les électrodes principales (HE1, HE2) dans chaque percement de paroi (WD) et des électrodes principales (HE1, HE2) dans les cuves supports (TW) avec intercalation de feuilles pour brasage fort,
**IV.** Utilisation de broches supports (TS) comme éléments de retenue à extraction mécanique pour les électrodes auxiliaires (HN1, HN2) en forme de barre dans des trous de paroi (WL) du tube de décharge (ER) et des électrodes auxiliaires (HN1, HN2) sur les broches supports (TS) avec intercalation de douilles pour brasage fort,
V. Brasage fort des bagues supports (TR), cuves supports (TW) et broches supports (TS) avec des revêtements métalliques partiels appropriés sur le tube de décharge (ER), des électrodes principales (HE1, HE2) avec les cuves supports (TW) et des électrodes auxiliaires (HN1, HN2) avec les broches supports (TS) dans un four à braser commandé,
**VI.** Soudage étanche au gaz des miroirs résonateurs (RS) optiques montés et revêtus d'une couche réfléchissante, qui résistent à des températures supérieures à 355°C, dans les deux bagues supports (TR) brasées à l'intérieur,
**VII.** Vidage par pompage du tube de décharge (ER) jusque dans la zone de l'ultravide au moyen d'un tuyau de pompage (PR) et chauffage simultané du tube de décharge (ER) jusqu'à une température supérieure à 355°C,
**VIII.** Remplissage du tube de décharge (ER) avec du gaz pour laser et gaz tampon (LG) au moyen du tuyau de pompage (PR), enlèvement du tuyau de pompage (PR) et fermeture étanche au gaz de l'ouverture,
**IX.** Fixation de bagues de pression (DR) sur les bagues supports (TR) brasées à l'intérieur et soudées avec les miroirs résonateurs (RS),
**X.** Ajustage des électrodes principales (HE1, HE2) et des miroirs résonateurs (RS) par déformation plastique permanente des cuves supports (TW) et des bagues supports (TR) et
**XI.** Placement du circuit d'excitation électrique (EA) et établissement de contact avec les électrodes principales et auxiliaires (HE1, HE2, HN1, HN2).

10. Procédé selon la revendication 9,
**caractérisé en ce que**
le brasage fort est effectué selon l'étape de procédé V à une température supérieure à 900°C.

11. Procédé selon la revendication 9 ou 10,
**caractérisé en ce que**
la mise en place du circuit d'excitation électrique (EA) s'effectue selon l'étape de procédé XI sous forme de circuit du type Blümlein par intégration de condensateurs à conducteur plat (BK) dans un conducteur plat (BL) ou par application directe sur d'autres revêtements métalliques partiels de façon coaxiale dans la direction diamétralement opposée des trajets de courant dans les condensateurs à conducteur plat (BK) sur le côté extérieur du tube de décharge (ER) et au moins un commutateur statique (HS) à commutation directe avec une surface de l'ordre de 25 mm² étant disposé à une hauteur de l'ordre de 1 mm entre les condensateurs à conducteur plat (BK) sur le conducteur plat (BL) ou directement sur le tube de décharge (ER) pour la commutation de la décharge de courant élevé.

12. Procédé selon l'une quelconque des revendications 9 à 11,
**caractérisé en ce que**
des composants sont utilisés pour la circulation active du gaz dans des ouvertures (OF) dans les électrodes principales (HE1, HE2).
